# EUROPEAN PATENT SPECIFICATION

(11) **EP 0 305 621 B1**
(45) Date of publication and mention of the grant of the patent: **21.07.1993**
(21) Application number: 87311342.7
(22) Date of filing: 23.12.1987
(51) Int. Cl.: C09K 3/22

(54) **A dust suppressant forming a resilient layer**
Eine elastische Schicht bildender Staublinderer
Suppresseur de poussière formant une couche élastique

(30) Priority: 24.08.1987 US 88234
(43) Date of publication of application: 08.03.1989
(73) Proprietor: Carbochem Inc., Mississauga, Ontario L4W 2V4 (CA)
(72) Inventor: Kremer, Henry A., Richmond Hill Ontario L4J 1G3 (CA)
(74) Representative: McCall, John Douglas

(56) References cited:
- DE-C- 513 846
- FR-A- 2 524 899
- GB-A- 1 506 765
- US-A- 3 708 319
- US-A- 4 561 905

## Description

This invention is directed to a new dust suppressant dispersion forming a resilient layer on dusting materials or substances such as ores, coal and the like, hereinafter referred to as "dusting materials" for sake of brevity. This invention is particularly useful for fugitive emissions of dusting materials during transport in moving trains, and is also directed to a process of making said dispersion, and to a one step method of treating dusting materials with said dispersion.

If one wishes to transport dusting materials, it is a problem. This is even more so with coal dust which has the distinctive yet unfortunate quality of being highly visible, deep black in colour perceived by the public eye as a threat to health as well as an aesthetic blight on our environment. Windy conditions around stockpiles or during product handling or during transportation to ocean terminals can carry fine dust particles over large distances to sensitive locations. Areas negatively affected include: (1) increased on-site maintenance of industrial equipment; (2) environmental damage to agricultural areas and private properties, (3) concern for human health, and (4) weight loss.

Many conventional products produce a cohesive but brittle "skin" with little weight and binding to a substrate. These products rely solely upon their cohesive strength to maintain a surface cover to provide protection from wind entrainment of the dust particles. Some involved wetting agents, others emulsifying agents: A wetting agent is a product which reduces the contact angle between the substrate and a coating "flattening the roundness".

A surfactant in which emulsifying agents are classified, is a product that reduces the surface tension, and the contact angle, prevents coagulation of particles and helps film forming. For instance, Shaw et al discloses in Canadian Patent 1,062,967 (or its U.S. equivalent 4,264,333) a method which consists in wetting the coal in a first step, with a wetting agent which can be cationic, anionic and preferably nonionic, then adding in a second step a coal tar emulsion obtained with a cationic emulsifying agent. Said wetting agent followed by the coal tar emulsion allows for a thin skin or a film be formed with little weight and showing low binding strength to the substrate. U.S.P. 2,448,605 invented by Kleinicke in 1948, discloses a product which consists in fatty acids, a petroleum oil soluble wetting agent, a low viscosity hydrocarbon distillate having a high aromaticity component solvent for the fatty acid, a wetting agent, and is miscible with petroleum oil and in dominating proportion a petroleum oil of the order of Bunker "C" oil. U.S.P. 2,621,115 as invented by VanOrder discloses an oil-in-water emulsion from ultramarine, an oil forming a refraction index between 1.35 and 1.75, an emulsifying agent and at least 71% water. Rubber latex was also suggested by Booth et al in U.S.P. 2,854,347.

Coal tar contains light oils, tar acid oils (i.e. phenols, creosols and homologues), naphtalene oils, wash oils, light arthracene oils, the heavy anthracene oils and residue which remains after the removal of heavy anthracene oils, that residue being commonly called coal tar pitch.

### THE INVENTION

Applicant's suspension is generally less susceptible to freezing without addition of anti-freeze compounds, and is less susceptible to blocking the spray nozzles than the conventional products providing more cohesive crust as compared against the prior art. The new product is also easy to store, handle, use and apply. It is generally directly applied and does not require emulsifying or wetting agents.

In association with coal, applicant's suspension penetrates the surface of coalbed, down as much as four inches or more, to form a resilient and not a rigid layer, which remains relatively soft: It has certain amount of give and is elastic as opposed to rigid to provide continued bonding of coal particles, considering that during shunting of trains, rigid layers tend to break.

Applicant's suspension penetrates the surface down four inches or more to form a resilient layer surpassing crust retention values of all other products tried for at comparable solid content. The deep penetration is achieved by the excellent wetting capabilities of applicant's suspension, enhanced by the natural affinity between the coal and applicant's suspension. Removal of the surface layer by wind shear is thus inhibited by the deep penetration of the suspension and the natural weight of the formed crust. Applicant's innovative new advance in dust control technology of dusting materials thus yields a product with continuously regenerative capabilities: This means for instance that if for one reason or another the dust suppressant layer breaks on the dusting material such as coal, because of the thick penetration generally the lower surface still protects the materials from dusting.

The new product minimizes dust losses during storage and transportation: Surface coverage in association with coal, is generally 90% and higher as compared against approximately 85% or slightly more or less achieved previously by other products at the same solid level. It also enables the elimination of significant environmental impact, and compliance with regulatory agency environmental requirements.

Broadly stated, the invention is directed to a dust suppressant forming a resilient layer penetrating dusting materials comprising: at least 45% water, a water thickening agent dissolved in water, and forming with water a dispersion medium, and a coal tar pitch dissolved in an aromatic solvent, and forming the dispersed liquid which results in a suspension.

Generally the dust suppressant comprises:
at least 45% water, and preferably 70%,
a water thickening agent dissolved in water, and forming with water a dispersion medium,
said dispersion medium having a pH of about 7 to 9, and a viscosity as measured by ASTM-D4402 of at least 2000 centipoises (cps) at 25°C,
a coal tar pitch dissolved in an aromatic solvent, at least 70% of said aromatic solvent boiling substantially over 270°C, and having a residual softening point of about 40 to 70°C as measured by ASTM-D-36, and forming the dispersed liquid, which results in a suspension, (generally between 20 and 55% and preferably 30% of the coal tar pitch dissolved in solvent is present in the dust suppressant material as a concentrate).
said dispersed liquid forming droplets,
said dispersion having a viscosity of 3500 to 15000 cps at 25°C.

The ratio of the weight of the dispersion medium is generally between 1.25 to 13 per part of the dispersed liquid forming droplets having a size average of 500 to 5000 micrometers (formally called microns).

This product is particularly suited for coal where it forms a resilient penetrating layer, said dust suppressant being self-regenerating. This dust suppressant may however be used on other materials such as coke, sulfur, clay, lime, and other pulverized materials and minerals such as silicates which are clay like, lime and lime like products, such as, for instance, gypsum and generally any other material compatible with this dust suppressant: that is whereby the dust suppressant is film formable over said dusting material.

The invention is also directed to a process for making a coal dust suppressant which comprises:
a) adding to water having a pH of about 7 to 9, a thickening agent to form a dispersion medium having a viscosity of at least 2000 centipoises at 25°C as measured with a Brookfield, and preferably 3500 to 15000 centipoises and much preferably 3500-8000. Higher viscosity could be used if desired bearing in mind that the suspension should possess good handling characteristics to be mixed or sprayed,
b) dispersing under high shear conditions into said dispersion medium, a pitch dissolved in an aromatic solvent boiling substantially over 270°C, and having a residual softening point of about 40 to 70°C as measured by ASTM-D-36, said aromatic solvent being substantially the solvent agent of said pitch,
   and thereby obtaining a suspension,
The invention also embraces diluting the suspension to obtain a suspension having 90-98% water content say to obtain a suspension having 2-5% by weight of solution by weight of pitch dissolved in the aromatic solvent and directly spraying 0.5-3 liter of said diluted suspension per ton of dusting material such as coal, which is equivalent to approximately 45-300 liter per rail car. This corresponding to 10-40 grams of suspension solids per metric ton of dusting material.

By thickening agent is meant a product either organic or inorganic, that increases the viscosity of water and is compatible with the anthracene oil solution of coal tar pitch suspended in water.

Typical examples of organic thickening agents include: various starches, cellulose ethers such as the carboxy-alkyl types. For instance, sodium carboxy-methyl cellulose, sodium carboxyethyl cellulose, sodium hydroxy-propyl cellulose, sodium hydroxy-ethyl cellulose. Synthetic long chain polymers having bi-functional repeating units. These bi-functional units have a linking function generally located at one end of the units to link the units into a polymer, and a hydrophillic function generally located at the other end of the units. Examples of linking units include, for instance, polymerizable olefinic groups, and of hydrophillic functional groups include carboxylic groups such as acids, esters, salts, preferably of sodium and ammonium and the like.

Synthetic polymers include polyacrylates, glycerols, glycols, homologues and polyglycols.

Typical examples of inorganic thickening agents include, lime, calcium chloride, aluminum salts such as Al₂(SO₄)₃ and the like, phosphates like sodium orthophosphates (Na₃PO₄), alkalies such as ammonium hydroxide and/or sodium hydroxides in association with clay or phosphates.

By coal tar pitch is meant the solid distillation residue, that is water-insoluble, left behind after distillation or fractionation of the various cuts having a boiling point up to 300°C. The cuts removed are such as light oil, phenols, tar acid oils (i.e. cresols and homologues), naphatalene oils, and some of the higher boiling distillates i.e. part of wash oils and anthracene oils, essentially most of the components boiling up to 300°C, bearing in mind the azeotropic characteristics of the solvents preventing complete separation at a given boiling point.

### PREFERRED WAY OF CARRYING OUT THE INVENTION

The adjustment of the pH is normally done by the addition of NaOH, although other basic material that are not detrimental to the formation of the suspension may be used.

The thickening agent is added in amount as to adjust the water which will form the dispersion medium to a viscosity of at least 2000 cps at 25°C as measured by Brookfield viscosimeter and according to ASTM-D4402.

Normally the addition of the coal tar pitch in solution further raises the viscosity of the dust suppressant above 3000 cps. The coal tar pitch which is the solid residue of the distillation is dissolved with anthracene oil, say for instance, in a weight ratio in the order of 17 to 3.

Preferably, the aromatic solvent has a boiling point range of 240-380°C. Among the preferred aromatic solvents are heavy anthracene oils having less than 1% material boiling below 235°C, (as measured by ASTM-D20 method)
less than 30% material boiling below 270°C, and
less than 75% material boiling below 355°C.

The pitch dissolved in high boiling solvents such as anthracene oils may be obtained either by dissolving the pitch with anthracene oils to obtain the required product specification or by obtaining from a coal tar distillation directly the fraction containing the soft pitch.

In a preferred embodiment, the pitch dissolved in anthracene oils has the following:
viscosity data: Brookfield viscosimeter, thermosel spindle #31 speed 12 RPM viscosity at 100°C 210±5cps, and at 150°C spindle #31, 30 RPM 35± cps.

The dispersion medium is brought under such conditions with a colloid mill such as a "Lancaster Dispenser" made by Johanson, N.Y. having a production capacity of approximately 4500 liters/hr of dispersion. A ribbon mixer may also be used as well as other colloid mills and high performance mixers. The suspension is obtained nearly instantaneously.

Preferably the pitch dissolved in boiling solvent is brought hot in the dispersion medium, the pitch being at a temperature above the boiling point of the dispersion medium. Most preferably, the dispersion medium is at a temperature of about 40-70°C when mixed with the pitch dissolved in boiling solvent.

Preferably, the product is supplied in concentrated form as high as 50% and more to be diluted to concentration as low as 2% on site prior to application. Dilution can be performed using either a batch process or in-line mixing. The suspension is generally stable for a short time, down to as low as 1/2% active material. The two most important parameters in the choice of spray solution are the concentration of the active ingredients (non-aqueous ingredients) and the total volume of the solution per area. The concentrate quantity chosen determines the cohesive and regenerative strength of the binder solution whereas the total volume applied determines the depth of penetration and therefore the thickness of the layer of impregnation.

In a particular embodiment for each part by weight of water having a thickening agent, there is about an equivalent part by weight of the solution of pitch dissolved in anthracene oils, and the viscosity of the pitch is over 100 centipoises at 50°C and preferably 3000 cps at 50°C.

Typical applications of applicant's product include the suppression of dust during handling and transportation of coal. The diluted solution is spread onto the coal surface by means of spray nozzles such as sray bars without clogging piping or nozzles. The concentrate/water dilution ratios required for various concentrate quantities and total volumes used are illustrated on Table 1 for coal. The recommended concentrate quantity and spray volume are also highlighted.

**TABLE 1**

| APPLICATION REQUIREMENTS FOR COAL TRAINS DILUTION RATIOS AT VARIOUS CONCENTRATIONS AND VOLUMES | | | |
|---|---|---|---|
| Concentration Quantity (l/car) | Total Volume Sprayed (per car) | | |
| | 90 l. | 140 l. | 180 l. |
| 0.5 | 1:180 | 1:280 | 1:360 |
| 1.0 | 1:90 | 1:140 | 1:180 |
| 1.5 | 1:60 | 1:93 | 1:120 |
| 2.0 | 1:45 | 1:70 | 1:90 |
| 2.5 | 1:36 | 1:56 | 1:72 |
| 3.0 | 1:30 | 1:47 | 1:60 |
| 3.5 | 1:26 | 1:40 | 1:51 |
| 4.0 | 1:23 | 1:35 | 1:45 |

### EXAMPLES 1-5

A dust suppressant having the following characterists was made:
1. Solids - approx. 30 ± 2%
2. Viscosity @ 25°C, Brookfield RVF, Spindle #4 ASTM-D4402 - 3500 - 8000 cps
3. pH - 7-9
4. Spreadability - excellent
5. Film formation after dilution 5 times - good (no droplets)
6. Chemical composition - coal tar pitch base
7. Freeze Thaw Stability - susceptible without antifreeze
8. Volatile Phase - water
9. Thickner - sodium polyacrylate having a reactivity of 190 g/mole

The product was used on coal trains as per Table 2 and found to yield a surface coverage of 90% and higher.

**TABLE 2**

| COAL CRUST RETENTION ANALYSIS TESTS - SUMMARY | | | | | |
|---|---|---|---|---|---|
| EXAMPLE NO. | 1 | 2 | 3 | 4 | 5 |
| Application rate per car (liter/car) | 3.6 | 3.5 | 2.3 | 1.7 | 1.0 |
| Nozzle pattern | 1 | 1 | 2 | 2 | 2 |
| Front slope (deg) | 6 | 13 | 12 | 11 | 10 |
| Front length (ft) | 4 | 5 | 3 | 4 | 5 |
| Exposure on front (%) | 13 | 19 | 3 | 4 | 44 |
| Exposure on centre(%) | 0 | 0 | 0 | 0 | 1 |
| Rear slop (deg) | 14 | 33 | 28 | 32 | 15 |
| Rear length (ft) | 5 | 7 | 4 | 6 | 5 |
| Exposure on rear(%) | 50 | 33 | 3 | 6 | 89 |
| Total coverage (%) | 94 | 93 | 100 | 99 | 84 |

### EXAMPLE 6

The same was repeated as in Example 1 except that 0.1 - 0.5% of CaCl₂ was used as thickner under 9, the pH was 7.5-9 under 3.

### EXAMPLE 7

Although the dust suppressant is particularly useful on coal, it is also effective on other compatible dusting materials for example when the dusting material used was powdered sulfur.

Having described the invention, modifications will be evident to those skilled in the art without departing from the spirit of the invention, as defined in the appended claims.

## Claims

1. A dust suppressant concentrate which comprises an aqueous suspension with a water content of at least 45%, a solution of 20 to 55% of coal tar pitch in an aromatic solvent, and a dispersion of a water thickening agent in water.

2. A dust suppressant concentrate according to claim 1, wherein at least 70% of the aromatic solvent boils at substantially over 270°C.

3. A dust suppressant concentrate according to claim 1 or claim 2, wherein the aromatic solvent is anthracene oil.

4. A dust suppressant concentrate according to any of claims 1 to 3, wherein the solution of the coal tar pitch in an aromatic solvent has a softening point of 40 to 70°C as measured by ASTM-D-36.

5. A dust suppressant concentrate according to any of claims 1 to 4, wherein the water thickening agent is a starch, an inorganic thickening agent, a long chain polymer having bifunctional repeating units consisting of a linking function and a hydrophillic function, a poly hydroxy-methyl cellulose or a sodium polyacrylate.

6. A dust suppressant concentrate according to any of claims 1 to 5, wherein the amount of the water thickening agent is not exceeding 3% by weight of the aqueous dispersion.

7. A process of making a dust suppressant concentrate according to claim 1, comprising adding to water, a thickening agent to form a dispersion medium, dispersing under high shear conditions into said dispersion medium, a pitch dissolved in an aromatic solvent.

8. A process according to claim 7 characterised by:
a) adding to water having a pH of about 7 to 9, a thickening agent to form a dispersion medium having a viscosity of at least 2000 centipoises at 25°C as measured by ASTM-D-4420, with a Brookfield,
b) dispersing under high shear conditions into said dispersion medium, a pitch dissolved in an aromatic solvent, at least 70% of which is boiling over 270°C, said aromatic solvent being substantially the solvent agent of said pitch.

9. A process according to claim 7 or claim 8, wherein for each part by weight of water having a thickening agent, there is about an equivalent part by weight of the solution of pitch dissolved in anthracene oils and the viscosity of the pitch is over 1000 centipoises at 50°C.

10. A process according to any of claims 7 to 9, wherein there is between 1 to 50% by weight of pitch dissolved in anthracene oils, per 100 parts of the suspension.

11. A process according to any of claims 7 to 10 wherein the step b) is conducted when the pitch dissolved in anthracene oils is at a temperature above the boiling point of the dispersion medium.

12. A process according to any of claims 7 to 11, wherein the aromatic solvent is anthracene oil, and the resulting solution of pitch dissolved in anthracene oils has a viscosity at 100°C of 210 ± 25 cps, and at 150°C of 35 ± 5 cps.

13. A process according to any of claims 7 to 12, wherein the dispersion medium is at a temperature between 40 and 70°C.

14. A process for the use of the dust suppressant concentrate of claims 1 to 6, comprising diluting said suspension with water to obtain a suspension having 2 to 5% by weight of solution of pitch dissolved in said aromatic solvent, per 100 part of the suspension and directly spraying said suspension at a rate of 10 to 40 grams of suspension solids per metric ton of dusting material.

## Patentansprüche

1. Ein Staub unterdrückendes Konzentrat, enthaltend eine wäßrige Suspension mit einem Wassergehalt von mindestens 45 %, eine Lösung von 20 bis 50 % Steinkohlenteerpech in einem aromatischen Lösemittel und eine wäßrige Suspension eines Wasser verdickenden Mittels.

2. Ein Staub unterdrückendes Konzentrat nach Anspruch 1, **dadurch gekennzeichnet,** dass mindestens70 % des aromatischen Lösemittels oberhalb 270 °C sieden.

3. Ein Staub unterdrückendes Konzentrat nach einem der Ansprüche 1 oder 2, **dadurch gekennzeichnet,** dass das aromatische Lösemittel Anthracenöl ist.

4. Ein Staub unterdrückendes Konzentrat nach einem der Ansprüche 1 bis 3, **dadurch gekennzeichnet,** dass die Lösung des Steinkohlenteerpechs in einem aromatischen Lösemittel einen Erweichungspunkt, gemessen nach ASTM-D-36, von 40 bis 70 °C hat.

5. Ein Staub unterdrückendes Konzentrat nach einem der Ansprüche 1 bis 4, **dadurch gekennzeichnet,** dass das Wasser verdikkende Mittel Stärke, ein anorganisches Verdickungsmittel, ein langkettiges Polymer mit sich wiederholenden bifunktionellen Einheiten mit einer verzweigenden und einer hydrophilen Funktion, Polyhydroxymethylcellulose oder Natriumpolycrylat ist.

6. Ein Staub unterdrückendes Konzentrat nach einem der Ansprüche 1 bis 5, **dadurch gekennzeichnet,** dass die Menge des Wasser verdickenden Mittels 3 Gewichtsprozent der wässrigen Dispersion nicht übersteigt.

7. Verfahren zur Herstellung eines Staub unterdrückenden Konzentrats nach Anspruch 1, **dadurch gekennzeichnet,** dass zu Wasser ein Verdickungsmittel gegeben wird unter Bildung einer Dispersion und dass in diese Dispersion unter Einwirkung hoher Scherkräfte ein Pech dispergiert wird, das in einem aromatischen Lösemittel gelöst ist.

8. Verfahren nach Anspruch 7, **dadurch gekennzeichnet,** dass
a) zu Wasser mit einem pH-Wert von etwa 7 bis 9 ein Verdikkungsmittel gegeben wird, so dass sich eine Dispersion bildet, die bei 25 °C eine Viskosität von mindestens 2000 centipoise hat, gemessen gemäss ASTM-D-4420 mit einem Brookfield-Viskosimeter
b) in diese Dispersion unter hohen Scherkräften ein Pech dispergiert wird, das in einem aromatischen Lösemittel gelöst ist, wobei mindestens 70 % des Lösemittels oberhalb 270 °C sieden und das aromatische Lösemittel im wesentlichen das Lösemittel des Pechs ist.

9. Verfahren nach Anspruch 7 oder 8, **dadurch gekennzeichnet,** dass auf jeden Gewichtsteil Verdickungsmittel enthaltendes Wasser ein äquivalenter Gewichtsteil Pech, gelöst in Anthracenöl, kommt und die Viskosität des Pechs bei 50 °C oberhalb 1000 centipoise liegt.

10. Verfahren nach einem der Ansprüche 7 bis 9, wobei zwischen 1 und 50 Gewichtsprozent der Pechlösung in Anthracenöl zu 100 Teilen der Suspension gegeben werden.

11. Verfahren nach einem der Ansprüche 7 bis 10, wobei Schritt b) durchgeführt wird mit einer Temperatur der Pechlösung in Anthracen, die oberhalb des Siedepunktes des dispergierenden Mittels liegt.

12. Verfahren nach einem der Ansprüche 7 bis 11, wobei das aromatische Lösemittel Anthracenöl ist und die resultierende Lösung von Pech in Anthracenöl bei 100 °C eine Viskosität von 210±25 centipoise und bei 150 °C von 35±5 centipoise hat.

13. Verfahren nach einem der Ansprüche 7 bis 12, wobei das dispergierende Mittel eine Temperatur zwischen 40 und 70 °C hat.

14. Verfahren zur Verwendung des Staub unterdrückenden Konzentrats gemäss den Ansprüchen 1 bis 6, **dadurch gekennzeichnet,** dass die Suspension mit Wasser zu einer Suspension verdünnt wird, die 2 bis 5 Gewichtsprozent der Lösung des Pechs im aromatischen Lösemittel in 100 Teilen der Suspension enthält, und dass diese Suspension in einer Menge von 10 bis 40 g der Suspensionsfeststoffe pro t staubenden Materials versprüht wird.

## Revendications

1. Concentré d'inhibiteur de poussière, qui comprend une suspension aqueuse ayant une teneur en eau d'au moins 45 %, une solution de 20 à 55 % de brai de houille dans un solvant aromatique, et une dispersion dans l'eau d'un épaississant pour l'eau.

2. Concentré d'inhibiteur de poussière selon la revendication 1, dans lequel au moins 70 % du solvant aromatique bout à sensiblement plus de 270°C.

3. Concentré d'inhibiteur de poussière selon la revendication 1 ou la revendication 2, dans lequel le solvant aromatique est une huile anthracénique.

4. Concentré d'inhibiteur de poussière selon l'une quelconque des revendications 1 à 3, dans lequel la solution du brai de houille dans un solvant aromatique a un point de ramollissement de 40 à 70°C, tel que mesuré selon la norme ASTM D-36.

5. Concentré d'inhibiteur de poussière selon l'une quelconque des revendications 1 à 4, dans lequel l'épaississant pour l'eau est un amidon, un épaississant minéral, un polymère à longue chaîne ayant des motifs récurrents difonctionnels consistant en une fonction de liaison et une fonction hydrophile, une polyhydroxyméthylcellulose ou un polyacrylate de sodium.

6. Concentré d'inhibiteur de poussière selon l'une quelconque des revendications 1 à 5, dans lequel la quantité de l'épaississant pour l'eau ne dépasse pas 3 % en poids de la dispersion aqueuse.

7. Procédé de fabrication d'un concentré d'inhibiteur de poussière selon la revendication 1, comprenant l'addition d'un agent épaississant à de l'eau pour former un milieu de dispersion, la dispersion dans ledit milieu de dispersion d'un brai dissous dans un solvant aromatique dans des conditions de fort cisaillement.

8. Procédé selon la revendication 7, caractérisé par :
a) l'addition d'un épaississant à de l'eau ayant un pH d'environ 7 à 9 pour former un milieu de dispersion ayant une viscosité d'au moins 2000 centipoises à 25°C, telle que mesurée selon la norme ASTM D-4420, avec un viscosimètre Brookfield,
b) la dispersion dans ledit milieu de dispersion, dans des conditions de fort cisaillement, d'un brai dissous dans un solvant aromatique dont au moins 70 % bout au-dessus de 270°C, ledit solvant aromatique étant essentiellement l'agent dissolvant dudit brai.

9. Procédé selon la revendication 7 ou la revendication 8, dans lequel, pour chaque partie en poids d'eau contenant un épaississant, il y a environ une partie équivalente en poids de la solution de brai dissous dans des huiles anthracéniques et la viscosité du brai dépasse 1000 centipoises à 50°C.

10. Procédé selon l'une quelconque des revendications 7 à 9, dans lequel il y a entre 1 et 50 % en poids de brai dissous dans des huiles anthracéniques pour 100 parties de la suspension.

11. Procédé selon l'une quelconque des revendications 7 à 10, dans lequel l'étape b) est conduite lorsque le brai dissous dans des huiles anthracéniques se trouve à une température supérieure au point d'ébullition du milieu de dispersion.

12. Procédé selon l'une quelconque des revendications 7 à 11, dans lequel le solvant aromatique est une huile anthracénique, et la solution résultante de brai dissous dans des huiles anthracéniques a une viscosité de 210 ± 25 cPo à 100°C, et de 35 ± 5 cPo à 150°C.

13. Procédé selon l'une quelconque des revendications 7 à 12, dans lequel le milieu de dispersion est à une température comprise entre 40 et 70°C.

14. Procédé d'utilisation du concentré d'inhibiteur de poussière selon les revendications 1 à 6, comprenant la dilution de ladite suspension avec de l'eau pour former une suspension contenant 2 à 5 % en poids de solution de brai dissous dans ledit solvant aromatique, pour 100 parties de la suspension, et la pulvérisation directe de ladite suspension à raison de 10 à 40 grammes de matière sèche de suspension par tonne métrique de matière génératrice de poussière.
